# EUROPÄISCHE PATENTSCHRIFT

(11) **EP 0 694 592 B1**
(45) Veröffentlichungstag und Bekanntmachung des Hinweises auf die Patenterteilung: **17.03.1999**
(21) Anmeldenummer: 95110894.3
(22) Anmeldetag: 12.07.1995
(51) Int. Cl.: C09D 5/03, C09D 125/14, C09D 133/14, C08G 59/32, C08G 18/79

(54) **Pulverlack und seine Verwendung**
Powder coating composition and its use
Revêtement à poudre et son utilisation

(30) Priorität: 25.07.1994 DE 4426333
(43) Veröffentlichungstag der Anmeldung: 31.01.1996
(73) Patentinhaber: BAYER AG, 51368 Leverkusen (DE)
(72) Erfinder: Wamprecht, Christian, Dr., DF-41472 Neuss (DE); Meier-Westhues, Hans-Ulrich, Dr., D-51379 Leverkusen (DE); Meixner, Jürgen, Dr., D-47803 Krefeld (DE); Kahl, Lothar, Dr., D-51465 Bergisch Gladbach (DE)

(56) Entgegenhaltungen:
- DE-A- 2 509 410

## Beschreibung

Die Erfindung betrifft einen neuen Pulverlack auf Basis von Epoxidgruppen und cyclischen Carbonsäureanhydridgruppen aufweisenden Copolymerisaten und Säuren bzw. Säurederivaten als Härter und die Verwendung dieses Pulverlacks zur Beschichtung hitzeresistenter Substrate, insbesondere zur Herstellung von Automobilklarlacken.

Pulverlacke auf Basis von epoxyfunktionellen Copolymerisaten, die Carbonsäuren, insbesondere Dicarbonsäuren bzw. Dicarbonsäureanhydride als Härter enthalten, sind bekannt (DE-AS 2240312, DE-AS 2240314, DE-OS 2457826 oder US-PS 4091048).

Auch Copolymerisate, die neben Epoxidgruppen noch weitere funktionelle Gruppen enthalten, z.B. Hydroxyl-, Anhydrid- oder Amidgruppen, können zur Herstellung von Pulverlacken verwendet werden (vgl. z. B. DE-OS 2441624, DE-OS 2441752, DE-OS 2441753, DE-OS 2457827, DE-OS 2457894, DE-OS 2509410, US-PS 3932367, US-PS 3991132, US-PS 4374954).

Die in diesen Veröffentlichungen beschriebenen Pulverlacke wurden insbesondere für die Automobillackierung entwickelt. Die resultierenden Lackfilme entsprechen jedoch bezüglich der Lösungsmittel- und Chemikalienbeständigkeit nicht in vollem Umfang den heutigen diesbezüglichen Anforderungen der Praxis.

Es hat daher nicht an Versuchen gefehlt, die unzureichende Lösemittelbeständigkeit von Pulverlacken auf Basis von epoxyfunktionellen Polyacrylaten und Dicarbonsäuren bzw. deren Mono- oder Polyanhydriden zu verbessern. So beschreibt die EP-A 0299420 mit Di- oder Polyolen modifizierte Polyanhydridvernetzer auf Basis von aliphatischen Dicarbonsäuren mit 3 bis 20 Kohlenstoffatomen. Entsprechende Pulverlacke mit epoxyfunktionellen Polyacrylaten als Bindemittel liefern gut verlaufende Lackfilme, die jedoch bei den in der Praxis geforderten, niedrigen Einbrenntemperaturen von ca. 140°C nicht die erforderliche Lösemittel- und Chemikalienbeständigkeit besitzen.

Die EP-A 0509392 und EP-A 0509393 beschreiben Pulverlacke auf Basis von epoxyfunktionellen Copolymerisaten und aliphatischen oder cycloaliphatischen Dicarbonsäuren, deren Anhydriden oder polyolmodifizierten Anhydriden. Erfindungswesentlich ist jeweils die erzielbare niedrige Einbrenntemperatur von 120°C, die im Falle der EP-A 0509392 auf einen Gehalt an tert.-Butylacrylat oder tert.-Butylmethacrylat von 5 bis 50 Gew.-% und im Falle der EP-A 0509393 auf einen Gehalt an Styrol von 35 bis 50 Gew.-% in dem epoxyfunktionellen Copolymerisat zurückzuführen sein soll.

Die US-PS 4346144 beschreibt Pulverlacke aus A) epoxyfunktionellen Copolymerisaten, B) aliphatischen Dicarbonsäuren mit 8 bis 18 Kohlenstoffatomen als Vernetzer und C) einer zusätzlichen Vernetzerkomponente, die mit Hydroxyl- oder Carboxylgruppen reagieren kann, wobei alkylierte Melamin-Formaldehydharze, alkylierte Glykolurilharze, aliphatische Glycidylether und cycloaliphatische Diepoxide genannt werden. Im Text und in mehreren Beispielen werden auch blockierte Polyisocyanate als zusätzliche Vernetzersubstanzen erwähnt.

Aus Umweltschutzgründen ist es jedoch wünschenswert, Lacke bereitzustellen, die völlig frei von Emissionen sind, seien es Lösungsmittel oder Abspalter in Form von Blockierungsmitteln.

Es war daher die der Erfindung zugrundeliegende Aufgabe, einen neuen Pulverlack zu entwickeln, der nicht mit den genannten Nachteilen des Standes der Technik behaftet ist, d.h. der bei Temperaturen unter 160°C zu einem glatt verlaufenden, elastischen, lösungsmittel- und chemikalienbeständigen Film von hohem Glanz ausgehärtet werden kann.

Diese Aufgabe konnte mit der Bereitstellung des nachstehend näher beschriebenen, erfindungsgemäßen Pulverlacks gelöst werden. Der neue Pulverlack ist durch die spezielle Zusammensetzung und spezielle molekulare Struktur der als Hauptbestandteil eingesetzten Polyacrylatkomponente A), die sowohl Epoxid- als auch cyclische Carbonsäureanhydridgruppen aufweist, gekennzeichnet.

Gegenstand der Erfindung ist ein Pulverlack zur Herstellung von bei Temperaturen von mindestens 120°C aushärtbaren, vergilbungsfreien, zähelastischen, lösemittel- und chemikalienbeständigen Beschichtungen, enthaltend
A) eine Bindemittelkomponente, bestehend aus mindestens einem Epoxid- und Anhydridgruppen aufweisenden Copolymerisat olefinisch ungesättigter Monomerer,
B) eine Härterkomponente mit einem Schmelzpunkt oder -bereich innerhalb des Temperaturbereichs von 40 bis 160°C, bestehend aus mindestens einer Komponente ausgewählt aus (i) (cyclo)aliphatischen Dicarbonsäuren mit 4 bis 20 Kohlenstoffatomen, (ii) monomeren und/oder polymeren Anhydriden derartiger Dicarbonsäuren, (iii) polyolmodifizierten, polymeren Anhydriden derartiger Dicarbonsäuren und (iv) aliphatischen Hydroxycarbonsäuren mit 4 bis 18 Kohlenstoffatomen, gegebenenfalls
C) weitere Zusatzvernetzer in Form von Uretdiongruppen aufweisenden Polyadditionsprodukten und gegebenfalls
D) aus der Pulverlacktechnologie bekannte Hilfs- und Zusatzmittel,
dadurch gekennzeichnet, daß die Bindemittelkomponente A) aus mindestens einem Copolymerisat aus
(i) 4 bis 50 Gew.-Teilen (Cyclo)alkyl, Aryl- und/oder Aralkylester olefinisch ungesättigter Mono- und/oder Dicarbonsäuren mit 1 bis 18 Kohlenstoffatomen im Alkohol- bzw. Phenolrest,
(ii) 26 bis 45 Gew.-Teilen Glycidylacrylat und/oder Glycidylmethacrylat,
(iii) 1 bis 8 Gew.-Teilen Maleinsäureanhydrid und/oder Itaconsäureanhydrid und
(iv) 20 bis 69 Gew.-Teilen Vinylaromaten,
besteht, wobei die Summe der Gew.-Teile (i) bis (iv) 100 ergibt, mit der Maßgabe, daß das Copolymerisat eine Glasübergangstemperatur Tg von 30 bis 80°C aufweist, ein numerisches, mittleres Molekulargewicht Mₙ von 1000 bis 6000 und eine Molekulargewichtsverteilung, gemessen durch das Verhältnis des als Gewichtsmittel bestimmten, mittleren Molekulargewichts zum numerischen, mittleren Molekulargewicht (M_{w}/Mₙ), im Bereich von 2,5 bis 10,0 besitzt, und die Komponenten A) und B), in solchen Mengenverhältnissen vorliegen, daß auf jede Epoxidgruppe der Komponente A) 0,5 bis 1,5 Carboxyl- und/oder Anhydridgruppen der Komponente B) entfallen.

Gegenstand der Erfindung ist auch die Verwendung dieses Pulverlacks zur Herstellung von Beschichtungen auf beliebigen hitzeresistenten Substraten, insbesondere bei der Herstellung von Automobilklarlacken.

Die DE-OS 2509410 beschreibt ähnliche, jedoch nicht identische Pulverlacke. Die Unterschiede liegen insbesondere in dem Anteil an epoxyfunktionellen Monomeren (max. 25 Gew-%), der qualitativen Zusammensetzung der nichtfunktionellen Monomeren und der Molekulargewichtsverteilung (M_{w}/Mₙ = 1,6 - 3,0, vorzugsweise 1,7 - 2,2) der Epoxid- und Anhydridgruppen aufweisenden Copolymerisate.

Die Bindemittelkomponente A) besteht aus mindestens einem Copolymerisat olefinisch ungesättigter Verbindungen, das neben Epoxidgruppen cyclische Anhydridgruppen enthält. Das Epoxyäquivalentgewicht der in der Komponente A) vorliegenden Copolymerisate liegt bei 284 bis 546 g/Mol, vorzugsweise 305 bis 536 g/Mol und besonders bevorzugt 320 bis 526 g/Mol. Das Anhydridäquivalentgewicht (berechnet als C₄H₂O₃) liegt bei 1225 bis 9800 g/Mol, vorzugsweise 1400 bis 9800 g/Mol und besonders bevorzugt 1633 bis 9800 g/Mol.

Die in der Bindemittelkomponente A) vorliegenden Copolymerisate weisen im übrigen eine Glasübergangstemperatur Tg von 30 bis 80°C, vorzugsweise 35 bis 75°C und ein numerisches, mittleres Molekulargewicht Mₙ von 1000 bis 6000, vorzugsweise 1000 bis 3000 und besonders bevorzugt 1000 bis 2600 auf. Die Molekulargewichtsverteilung, gemessen durch das Verhältnis des als Gewichtsmittel bestimmten mittleren Molekulargewichts M_{w} zum numerischen, mittleren Molekulargewicht Mₙ (M_{w}/Mₙ), liegt im Bereich von 2,5 bis 10,0, vorzugsweise 3,0 bis 9,5 und besonders bevorzugt 3,5 bis 9,0. Die hier gemachten Angaben bezüglich des Molekulargewichts beziehen sich auf die gelpermeationschromatographisch unter Verwendung von Polystyrol als Standard ermittelten Molekulargewichte M_{w} und Mₙ.

Bei den in der Komponente A) vorliegenden Copolymerisaten handelt es sich vorzugsweise um solche, aus
(i) 7,5 bis 45 Gew.-Teilen, besonders bevorzugt 10 bis 40 Gew.-Teilen (Cyclo)alkylester olefinisch ungesättigter Mono- und/oder Dicarbonsäuren mit 1 bis 18 Kohlenstoffatomen im (Cyclo)alkylrest,
(ii) 26,5 bis 42 Gew.-Teilen, besonders bevorzugt 27 bis 40 Gew.-Teilen Glycidylacrylat und/oder Glycidylmethacrylat,
(iii) 1 bis 7 Gew.-Teilen, besonders bevorzugt 1 bis 6 Gew.-Teilen Maleinsäureanhydrid und/oder Itaconsäureanhydrid und
(iv) 22 bis 65 Gew.-Teilen, besonders bevorzugt 25 bis 62 Gew.-Teilen Vinylaromaten,
wobei die Summe der Gew.-Teile (i) bis (iv) 100 ergibt.

Bei den Monomeren (i) handelt es sich beispielsweise um (Cyclo)alkylester oder, weniger bevorzugt, um Aryl- und/oder Aralkylester der Acryl- oder Methacrylsäure mit 1 bis 18, vorzugsweise 1 bis 9 Kohlenstoffatomen im Alkohol- bzw. Phenolrest, d.h. im vorliegenden Fall im (Cyclo)alkylrest oder, weniger bevorzugt im Aryl- bzw.- Aralkylrest, wie z.B. Methyl(meth)acrylat, Ethyl(meth)acrylat, n-Propyl(meth)acrylat, Isopropyl(meth)acrylat, n-Butyl(meth)acrylat, Isobutyl(meth)acrylat, tert.-Butyl(meth)acrylat, 2-Ethylhexyl(meth)acrylat, Neopentyl(meth)acrylat, Stearylmethacrylat und sonstige Ester der (Meth)acrylsäure, wie beispielsweise die Cyclohexyl-, Isobornyl-, 3,3,5-Trimethylcyclohexyl-, Maleinsäure- bzw. Fumarsäuredi(cyclo)alkylester mit 1 bis 18, vorzugsweise 1 bis 9 Kohlenstoffatomen in den (Cyclo)alkylresten, wie z. B. Maleinsäuredimethylester, Maleinsäurediethylester, Maleinsäurediisopropylester, Maleinsäurediisobutylester, Maleinsäuredi-tert.-butylester, Maleinsäuredicyclohexylester und die entsprechenden Fumarsäuredi(cyclo)alkylester.

Bei den Monomeren (ii) handelt es sich um Vinylaromaten, wie z. B. Styrol, Vinyltoluol oder α-Methylstyrol.

Bei der Herstellung der in der Komponente A) vorliegenden Copolymerisate können innerhalb der oben angegebenen Mengenanteilsgrenzen jeweils beliebige Gemische der Monomeren (i) bis (iv) verwendet werden, mit der Maßgabe, daß diese Auswahl bei der Herstellung der Copolymerisate so erfolgt, daß die resultierenden Copolymerisate Epoxidgruppen- und Anhydridgruppengehalte sowie Glasübergangstemperaturen und Molekulargewichte innerhalb der oben genannten Bereiche aufweisen.

Diese für die erfindungsgemäße Verwendbarkeit der Copolymerisate wesentliche Bedingung wird dann erfüllt, wenn bei der Herstellung der Copolymerisate ein geeignetes Verhältnis von "weichmachenden" Monomeren, die zur Erniedrigung der Glasübergangstemperatur der Copolymeren führen, zu "hartmachenden" Monomeren, die zur Erhöhung der Glasübergangstemperatur führen, zur Anwendung gelangt.

"Weichmachende" Monomere sind beispielsweise Alkylester der Acrylsäure, wie z. B. Ethylacrylat, n-Butylacrylat, Isobutylacrylat und 2-Ethylhexylacrylat.

"Hartmachende" Monomere sind beispielsweise Alkylester der Methacrylsäure, wie z.B. Methylmethacrylat, Ethylmethacrylat, Isobutylmethacrylat, Cyclohexylmethacrylat, Isopropylmethacrylat, tert.-Butylmethacrylat, Neopentylmethacrylat, Isobornylmethacrylat und 3,3,5-Trimethylcyclohexylmethacrylat, Vinylaromaten, wie z. B. Styrol, Vinyltoluol und α-Ethylstyrol.

Die Herstellung der Copolymerisate A) erfolgt durch radikalisch initiierte Copolymerisation der oben genannten Monomeren in geeigneten organischen Lösungsmitteln. Dabei werden die Monomeren bei Temperaturen von 60 bis 200°C, vorzugsweise 80 bis 180°C, in Gegenwart von Radikalbildnern und gegebenenfalls Molekulargewichtsreglern copolymerisiert.

Die Herstellung der Copolymerisate erfolgt vorzugsweise in inerten, organischen Lösungsmitteln. Geeignete Lösungsmittel sind beispielsweise Aromaten, wie Toluol oder Xylol, Ester wie Ethylacetat, Butylacetat oder Methoxypropylacetat, Ketone, wie Aceton, Methylethylketon oder Methylisobutylketon oder beliebige Gemische derartiger Lösungsmittel.

Die Herstellung der Copolymerisate kann kontinuierlich oder diskontinuierlich erfolgen. Üblicherweise wird in einen Polymerisationsreaktor gleichmäßig und kontinuierlich die Monomermischung und der Initiator eindosiert und gleichzeitig die entsprechende Menge Polymerisat kontinuierlich abgeführt. Vorzugsweise können so chemisch nahezu einheitliche Copolymere hergestellt werden. Chemisch nahezu einheitliche Copolymere können auch hergestellt werden, indem man die Reaktionsmischung mit konstanter Geschwindigkeit in einen Rührkessel einlaufen läßt, ohne das Polymerisat abzuführen.

Man kann auch einen Teil der Monomeren, vorzugsweise Maleinsäuredi(cyclo)alkylester und Maleinsäureanhydrid im Gemisch mit Lösungsmitteln der genannten Art vorlegen und die restlichen Monomeren und Hilfsmittel getrennt oder gemeinsam in diese Vorlage bei der Reaktionstemperatur eintragen. Im allgemeinen erfolgt die Polymerisation unter Atmosphärendruck, kann jedoch auch bei Drücken bis zu 25 bar durchgeführt werden. Die Initiatoren werden in Mengen von 0,05 bis 12 Gew.-%, vorzugsweise 0,1 bis 10 Gew.-%, bezogen auf die Gesamtmenge der Monomeren, eingesetzt.

Geeignete Initiatoren sind übliche Radikalstarter, wie z. B. aliphatische Azoverbindungen, wie Azodiisobuttersäurenitril, Azo-bis-2-methylvaleronitril, 1,1'-Azo-bis-1-cyclohexannitril und 2,2'-Azo-bis-isobuttersäurealkylester; symmetrische Diacylperoxide, wie z. B. Acetyl-Propionyl- oder Butyrylperoxid, mit Brom-, Nitro-, Methyl- oder Methoxygruppen substituierte Benzoylperoxide, Laurylperoxide; symmetrische Peroxydicarbonate, z. B. Diethyl-, Diisopropyl-, Dicyclohexyl- sowie Dibenzoylperoxydicarbonat; tert.-Butylperoxy-2-ethylhexanoat, tert.-Butylperbenzoat; Hydroperoxide, wie beispielsweise tert.-Butylhydroperoxid, Cumolhydroperoxid; Dialkylperoxide, wie Dicumylperoxid; tert.-Butylcumylperoxid oder Ditert.-butylperoxid.

Zur Regelung des Molekulargewichtes der Copolymerisate können übliche Regler bei der Herstellung eingesetzt werden. Beispielhaft genannt seien tert.-Dodecylmercaptan, n-Dodecylmercaptan oder Mercaptoethanol. Die Regler können in Mengen von 0,1 bis 8 Gew.-%, vorzugsweise 0,1 bis 4 Gew.-%, bezogen auf die Gesamtmenge der Monomeren, zugegeben werden.

Nach dieser Verfahrensweise erhält man organische Lösungen der Copolymerisate, die durch Entfernung des Lösungsmittels als gebrauchsfertige Feststoffe der oben genannten Glasübergangstemperatur und Gehaltes an funktionellen Gruppen isoliert werden.

Das Lösungsmittel bzw. Lösungsmittelgemisch wird dabei möglichst vollständig, in der Regel bis auf einen Restgehalt ≤ 2 Gew.-%, bevorzugt ≤ 1 Gew.-%, beispielsweise durch Sprühtrocknung, Entgasung in Ausdampfextrudern oder Destillation, gegebenenfalls im Vakuum, entfernt.

Im Falle einer Entgasung im Ausdampfextruder oder einer Destillation fallen die Copolymerisate als in der Hitze bei Temperaturen ≥ 100°C gut rührbare, viskose Schmelzen an, die nach Erkalten und Erstarren granuliert werden.

Die Härterkomponente B) besteht aus mindestens einer Komponente, ausgewählt aus der Gruppe bestehend aus (i) aliphatischen und/oder cycloaliphatischen Dicarbonsäuren mit 4 bis 20 Kohlenstoffatomen, bevorzugt sind gesättigte, aliphatische Dicarbonsäuren mit 4 bis 12 Kohlenstoffatomen, (ii) monomeren oder polymeren Anhydriden derartiger Säuren, (iii) polyolmodifizierten, polymeren Anhydriden derartiger Säuren und (iv) Hydroxycarbonsäuren, wobei diese vorzugsweise ausschließlich im Gemisch mit Anhydriden (ii) und/oder (iii) zum Einsatz gelangen.

Bei den Dicarbonsäuren (i) handelt es sich beispielsweise um Maleinsäure, Glutarsäure, Adipinsäure, Pimelinsäure, Suberinsäure, Azelainsäure, Sebacinsäure, Dodecandisäure (1,10-Decandicarbonsäure) oder 1,12-Dodecandicarbonsäure.

Monomere Anhydride (ii) derartiger Säuren sind beispielsweise Bernsteinsäure-, Maleinsäure-, Glutarsäure- oder Hexahydrophthalsäureanhydrid. Polymere Anhydride (ii) derartiger Säuren sind beispielsweise solche, wie sie durch intramolekulare Kondensation der genannten Säuren oder deren Gemisch erhalten werden können. Konkrete Beispiele sind Adipinsäure(poly)anhydrid, Azelainsäure(poly)anhydrid, Sebacinsäure(poly)anhydrid oder Dodecandisäure(poly)anhydrid. Das gelpermeationschromatographisch unter Verwendung von Polystyrol als Standard ermittelte Molekulargewicht M_{w} dieser Polyanhydride liegt im allgemeinen bei 600 bis 5000. Die Herstellung der Polyanhydride erfolgt beispielsweise durch Reaktion der Dicarbonsäuren bzw. der Dicarbonsäuregemische mit Essigsäureanhydrid bei Temperaturen von 120 bis 200°C, vorzugsweise 120 bis 170°C. Die dabei abgespaltene Essigsäure wird beispielsweise durch Destillation unter Vakuum entfernt.

Bei den polyolmodifizierten Anhydriden (iii) handelt es sich insbesondere um solche, wie sie gemäß EP-A 0299420 zugänglich sind. In diesen polyolmodifizierten Polyanhyriden liegt das Molverhältnis von Anhydridgruppen zu Carboxylgruppen im allgemeinen bei 0,04 : 1 bis 5.1, vorzugsweise 1 : 1 bis 3 : 1.

Bei den Komponenten (iv) handelt es sich insbesondere um Hydroxycarbonsäuren, die einen zwischen 40 und 150°C liegenden Schmelzpunkt aufweisen. Hierzu gehören beispielsweise 2-Hydroxyisobuttersäure (81°C), 2-Hydroxyhexansäure (61°C), 10-Hydroxydecansäure (76°C), 12-Hydroxydodecansäure (86°C), 16-Hydroxyhexadecansäure (98°C) und 12-Hydroxyoctadecansäure (80°C).

Diese Hydroxycarbonsäuren werden im allgemeinen nur in Kombination mit Polyanhydriden (ii) oder (iii), vorzugsweise (ii) in Mengen von maximal 50 Gew.-%, bezogen auf das Gewicht der Polyanhydride, eingesetzt.

Besonders bevorzugt besteht die Härterkomponente B) ausschließlich aus Dicarbonsäuren (i) oder monomeren bzw. polymeren Anhydriden (ii).

Die Härterkomponente B) wird im übrigen in solchen Mengen eingesetzt, daß das Gesamtmolverhältnis von Carboxyl- und/oder Anhydridgruppen der Härterkomponente zu Epoxidgruppen bei 0,5 : 1 bis 1,5 : 1, vorzugsweise bei 0,8 : 1 bis 1,2 : 1 liegt.

Bei der gegebenenfalls zugesetzten Härterkomponente C) handelt es sich um Uretdiongruppen aufweisende Polyadditionsverbindungen auf Basis aliphatischer und/oder cycloaliphatischer Diisocyanate, insbesondere um solche auf Basis von 1,6-Hexamethylendiisocyanat (HDI), 1-Isocyanato-3,3,5-trimethyl-5-isocyanatomethylcyclohexan (Isophorondiisocyanat, IPDI), 4,4'-Diisocyanatodicyclohexylmethan oder beliebige Gemische dieser Diisocyanate.

Die Herstellung solcher Polyadditionsverbindungen durch Umsetzung Uretdiongruppen aufweisender Polyisocyanate mit gegenüber Isocyanatgruppen reaktiven, difunktionellen und gegebenenfalls monofunktionellen Verbindungen, insbesondere ein- oder zweiwertigen, gegebenenfalls Estergruppen aufweisenden Alkoholen ist prinzipiell bekannt und wird beispielsweise in DE-OS 2420475, EP-A 0045996, EP-A 0045998 beschrieben. Die ggf. als Härter C) in Betracht kommenden Uretdiongruppen aufweisenden Polyadditionsverbindungen weisen im allgemeinen einen Gehalt an Uretdiongruppen (berechnet als C₂N₂O₂, Molekulargewicht = 84) von 3 bis 16 Gew.-% auf. Der Schmelzpunkt dieser Verbindungen liegt im allgemeinen innerhalb des Bereichs von 40 bis 125°C.

Die Härterkomponente C) wird in dem erfindungsgemäßen Pulverlack gegebenenfalls in solchen Mengen eingesetzt, daß auf jede Epoxidgruppe der Komponente A) 0,1 bis 1,2, vorzugsweise 0,2 bis 1,0 Uretdiongruppen entfallen.

Bei den gegebenenfalls mitzuverwendenden Hilfs- und Zusatzmitteln D) handelt es sich beispielsweise um Katalysatoren, wie z. B. Zinn(II)hexanoat, Zinn(II)octoat, Zinn(II)laurat, Dibutylzinn-oxid, Dibutylzinnchlorid, Dibutylzinndiacetat, Dibutylzinndilaurat, Dibutylzinnmaleat, Dioctylzinndiacetat, 1,4-Diazabicyclo(2,2,2)octan, 1,5-Diazabicyclo(4,3,0)-non-5-en oder 1,8-Diazabicyclo(5,4,0)-undec-7-en. Gegebenenfalls kommen auch Katalysatorgemische zum Einsatz. Weitere Vertreter von geeigneten Katalysatoren sowie Einzelheiten über die Wirkungsweise von solchen Katalysatoren sind im Kunststoffhandbuch Band VII, herausgegeben von Vieweg und Höchtlen, Carl-Hanser-Verlag, München 1966, z. B. auf den Seiten 96 bis 102, beschrieben. Katalysatoren als Zusatzmittel D) kommen, falls überhaupt, in Anteilen von 0,1 bis 5 Gew.-%, vorzugsweise 0,1 bis 3 Gew.-%, bezogen auf die Summe der Komponenten A), B) und gegebenenfalls C) zum Einsatz.

Weitere Hilfs- und Zusatzmittel D) sind beispielsweise auch Verlaufsmittel, wie, z.B. Polybutylacrylat oder solche auf Basis von Polysilikonen; Lichtschutzmittel, wie z.B. sterisch gehinderte Amine; UV-Absorber, wie z. B. Benztriazole oder Benzophenone, Pigmente, wie z. B. Titandioxid und Füllstoffe, wie z.B. Bariumsulfat.

Zu den oftmals, gegebenenfalls neben weiteren Hilfs- und Zusatzmitteln, eingesetzten Zusatzmitteln D) gehören insbesondere auch Farbstabilisatoren gegen die Gefahr der Überbrennvergilbung. Geeignet sind insbesondere, gegebenenfalls inerte Substituenten aufweisende, Trialkyl- und/oder Triarylphosphite wie beispielseise Triethylphosphit, Triphenylphosphit oder bevorzugt Trisalkylphenylphosphite, wobei die Alkylsubstituenten 6 bis 12 Kohlenstoffatome aufweisen. Ganz besonders bevorzugt ist Trisnonylphenylphosphit (technisches Produkt, bestehend im wesentlichen aus einem Ester der phosphorigen Säure mit dem Anlagerungsprodukt von Tripropylen an Phenol).

Zur Herstellung der gebrauchsfertigen Pulverlackformulierungen kann beispielsweise so vorgegangen werden, daß die Einzelkomponenten nach ihrer Pulverisierung miteinander vermischt werden. In einem solchen Falle bestünden die einzelnen Pulverpartikel aus den Einzelkomponenten A), B) und gegebenenfalls C) und D). Gemäß der bevorzugten Art der Herstellung von Pulverlacken werden jedoch die Bestandteile A), B) und gegebenenfalls C) und D) innig miteinander vermischt und beispielsweise in Extrudern oder Knetern bei Temperaturen oberhalb des Schmelzbereichs der Einzelkomponenten, beispielsweise bei 70 bis 120°C, zu einem homogenen Material vereinigt. Der nach Abkühlung der Schmelze resultierende Feststoff wird anschließend gemahlen und durch Sieben von den Kornanteilen oberhalb der gewünschten Korngröße, beispielsweise oberhalb 0,1 mm, befreit. Auf diese Weise entstehen "gemischte Pulver", in denen jedes einzelne Pulverpartikel bereits die Einzelkomponenten A), B) und gegebenenfalls C) und D) enthält.

Die Reihenfolge der Vereinigung der Einzelkomponenten A) bis D) ist weitgehend frei wählbar.

Die Mengenverhältnisse der Einzelkomponenten A), B) und gegebenenfalls C) werden, wie bereits oben ausgeführt, im übrigen so gewählt, daß auf jede Epoxidgruppe der Komponente A) 0,5 bis 1,5, vorzugsweise 0,8 bis 1,2 Carboxyl- und/oder Anhydridgruppen der Komponente B) und 0,1 bis 1,2, vorzugsweise 0,2 bis 1,0 Uretdiongruppen der Komponente C) entfallen.

Die so hergestellten Pulverlackformulierungen können nach üblichen Pulverauftragsverfahren, wie z.B. elektrostatischem Pulversprühen oder Wirbelsintern, auf die zu überziehenden Substrate aufgebracht werden. Die Härtung der Überzüge erfolgt durch Erhitzen auf Temperaturen von 120 bis 200°C, vorzugsweise 130 bis 150°C, beispielseise während eines Zeitraumes von 10 bis 60 Minuten, vorzugsweise 20 bis 40 Minuten. Man erhält harte, klare, gut verlaufene, glänzende und elastische Überzüge mit hervorragenden Korrosionsschutzeigenschaften, d.h. sehr guter Lösemittel- und Chemikalienbeständigkeit, insbesondere Acetonbeständigkeit, bereits bei niedrigen Einbrenntemperaturen von z. B. 140 bis 150°C über eine Dauer von 30 Minuten.

Erfindungsgemäß können beliebige, hitzeresistente Substrate, wie beispielsweise solche aus Glas, Metallen, Holz oder Kunststoffen beschichtet werden. Vorzugsweise dienen die erfindungsgemäßen Pulverlackformulierungen zur Herstellung von Beschichtungen auf Automobilkarosserien, insbesondere zur Herstellung von Automobilklarlacken.

Die in den nachfolgenden Beispielen genannten Teile und Prozente sind, sofern nicht anders angegeben, Gewichtsteile bzw. Gewichtsprozente.

### Beispiele

### I. Allgemeine Herstellvorschrift für die Epoxid- und Anhydridgruppen enthaltende Copolymerisate A

In einem 5-1-Edelstahldruckreaktor wird Teil I vorgelegt und auf die gewünschte Polymerisationstemperatur aufgeheizt. Dann werden durch separate Zuläufte gemeinsam beginnend Teil II (Monomermischung) in 1,5 Stunden und Teil III (Initiator) in 1,75 Stunden zudosiert. Anschließend wird 0,5 Stunden bei der Polymerisationstemperatur nachgerührt. Dann werden das Lösungsmittel und andere flüchtige Bestandteile, die häufig Spaltprodukte der Initiatoren oder Restmonomere sind, destillativ im Vakuum entfernt. Danach wird die heiße Schmelze auf Alublechschalen abgelassen und nach Abkühlung mechanisch zerkleinert. Die Zusammensetzungen und Kenndaten der erhaltenen Copolymerisate A) sind in Tabelle I aufgeführt.

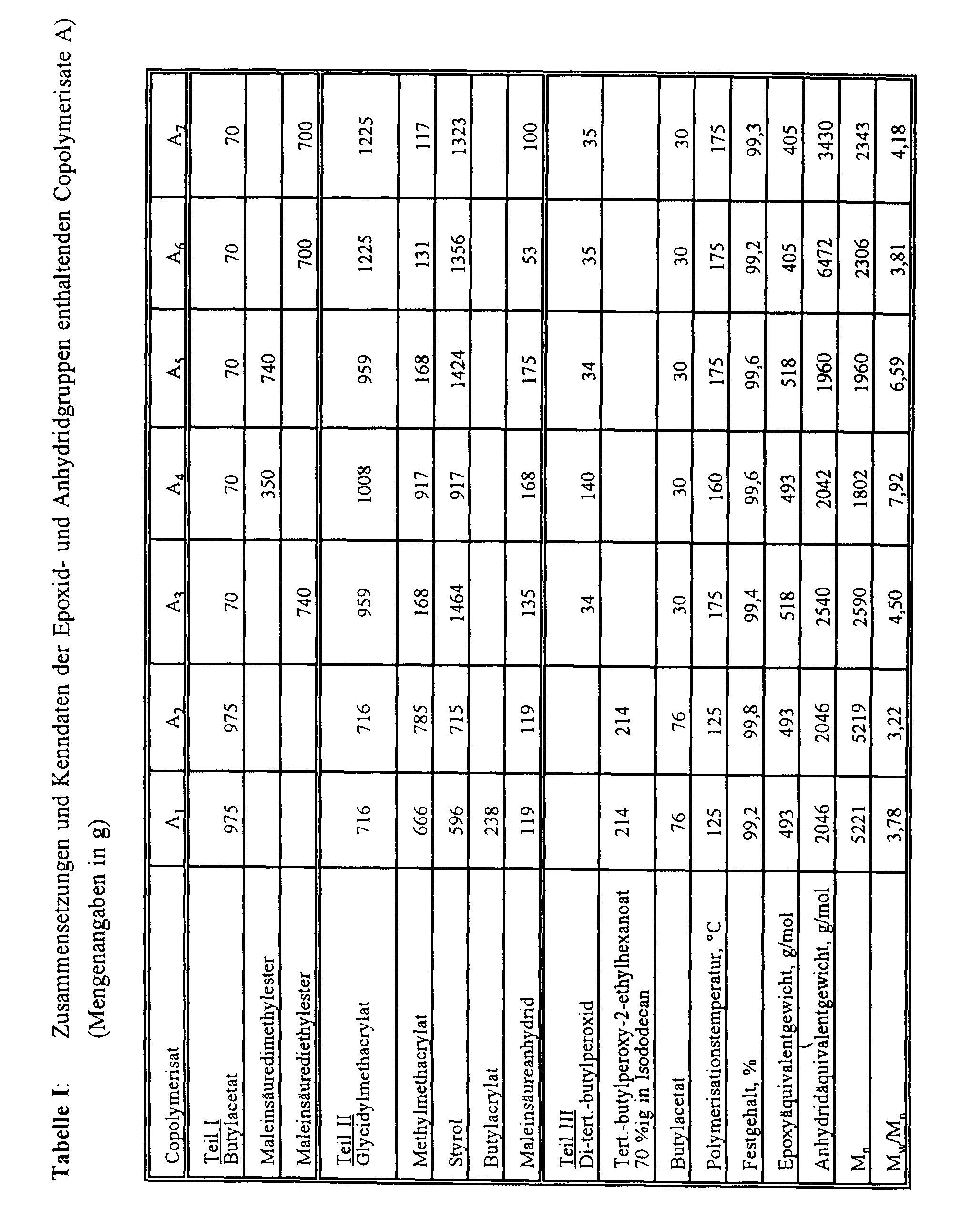

### II. Vergleichscopolymerisate V₁ bis V₄

- V₁:: Almatex PD 7610 (Handelsprodukt von Mitsui Toatsu) Epoxyfunktionelles Copolymerisat mit einem Epoxyäquivalentgewicht von ca. 535 g/mol und einem Molekulargewicht Mₙ von 2775 g/mol, M_{w}/Mₙ = 2,51
- V₂:: Epoxyfunktionelles Copolymerisat Nachstellung des Beispiels A der EP-A 299420 A2 Epoxyäquivalentgewicht: ca. 380 g/mol
- V₃:: Epoxid- und Anhydridgruppen enthaltendes Copolymerisat Nachstellung des Beispiels 1 der DE-OS 2509410 Epoxyäquivalentgewicht: ca. 950 g/mol Anhydridäquivalentgewicht: ca. 1400 g/mol
- V₄:: Epoxid- und Anhydridgruppen enthaltendes Copolymerisat Nachstellung des Beispiels 7 der DE-OS 2509410 Epoxyäquivalentgewicht: ca. 570 g/mol Anhydridäquivalentgewicht: ca. 820 g/mol

### III. Carboxylfunktionelle und/oder anhydridfunktionelle Vernetzer B)

### 1. Polanhydridvernetzer B1:

In einem 3-1-Dreihalskolben mit Rührer, Destillationseinrichtung und Thermometer werden 988 g 1,10-Decandicarbonsäure und 308 g Essigsäureanhydrid eingewogen und auf 150°C aufgeheizt. Die entstehende Essigsäure wird abdestilliert. Im Verlauf der Destillation wird die Temperatur auf 170°C erhöht und durch zusätzliches Anlegen von Vakuum die Essigsäure vollständig abdestilliert. Danach wird auf 100°C abgekühlt und das noch flüssige Produkt zum Abkühlen und Erstarren in eine Alublechschale gegossen. Es wird ein Feststoff vom Schmelzpunkt 85°C erhalten. Anhydrid und Carbonsäure Äquivalent: etwa 160 g/mol.

### 2. Dicarbonsäurevernetzer B2:

### 1,10-Decandicarbonsäure

### IV. Verwendungsbeispiele

Die zum Einsatz gelangenden Komponenten werden gründlich gemischt und anschließend auf einem Co-Kneter der Fa. Buss AG, Basel, Typ PLK 46 homogenisiert. Dabei beträgt die Gehäusetemperatur 40°C im Einzugsbereich und 50°C im Verfahrensteil. Die Kneterwelle läuft mit 150 U/Min. Zur Erzielung optimaler Durchmischung wird zweimal extrudiert. Die erstarrten Schmelzen werden mittels einer Sichtermühle, Typ ACM 2, der Fa. Hosokawa-Mikropul, Köln, zu Pulverlacken mit einer Teilchengröße < 90 µm gemahlen. Mit einer Elektrostatik-Becherpistole der Fa. ESB werden die Pulverlacke auf entfettete Stahlbleche gesprüht. Dabei liegt eine Hochspannung von 70 kV(-) an. Die Aushärtung erfolgt innerhalb 30 Minuten auf einem Gradientenofen der Fa. Byk bei 140°C und 150°C. In der Tabelle II sind die Zusammensetzungen der erfindungsgemäßen Pulverlacke auf Basis der Copolymerisate A₁ bis A₇ und der Vergleichslacke auf Basis der Copolymerisate V₁ bis V₄ aufgeführt.

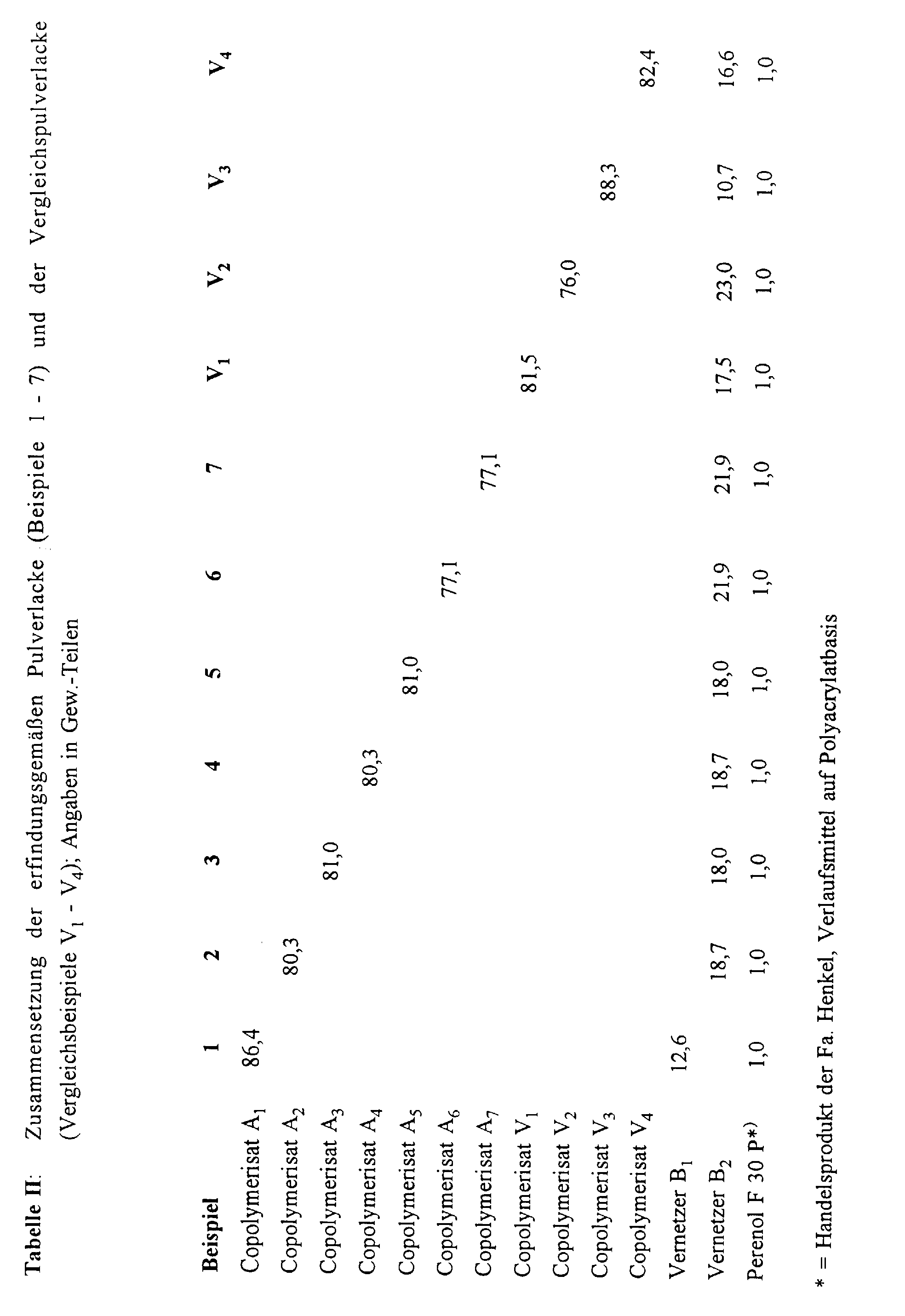

### Prüfergebnisse der erfindungsgemäßen Pulverlacke (Beispiel 1 - 7) und der Vergleichspulverlacke (Vergleichsbeispiele V₁ - V₄)

### 1. Einbrennbedingungen: 30 Minuten, 140°C

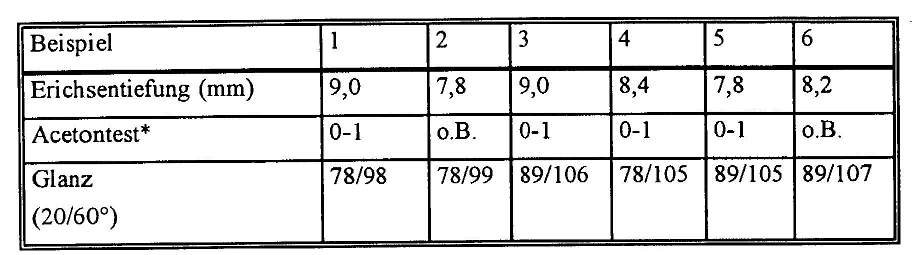

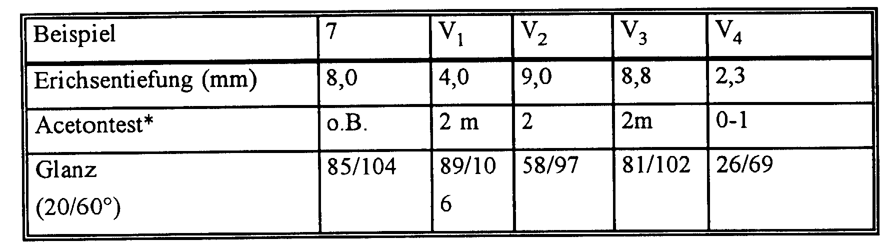

### 2. Einbrennbedingungen: 30 Minuten, 150°C

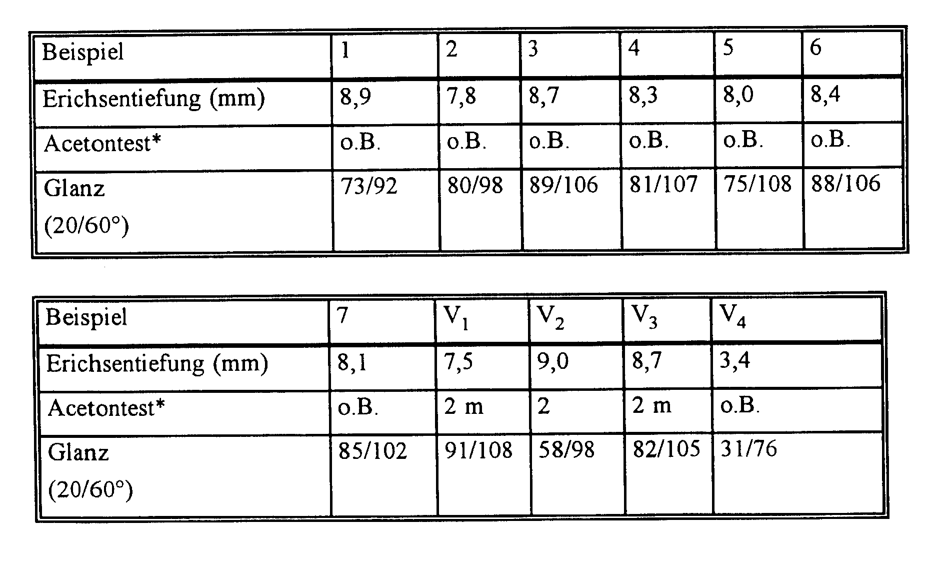

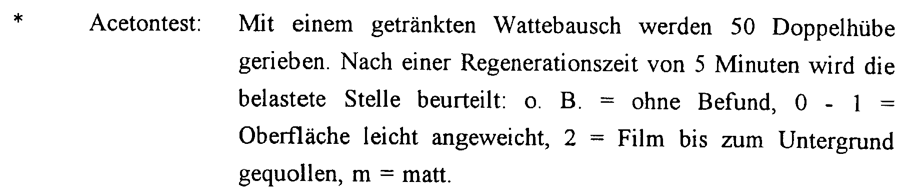

### Diskussion der Ergebnisse

Die erfindungsgemäßen Pulverlacke der Beispiele 1 - 7 zeigen schon bei Einbrennbedingungen von 30 Minuten bei 140°C eine recht gute Acetonbeständigkeit, bei hoher Filmelastizität und gutem Glanz. Bei Einbrennbedingungen von 30 Minuten bei 150°C ist die Acetonbeständigkeit der erfindungsgemäßen Pulverlackfilme sehr gut. Die Lackfilme der Vergleichsbeispiele V₁ bis V₃ haben sowohl bei einer Einbrenntemperatur von 140°C als auch von 150°C eine schlechte Acetonbeständigkeit. Der Lackfilm des Vergleichsbeispiels V₄ hat zwar eine gute bzw. sehr gute Acetonbeständigkeit, ist jedoch sehr wenig elastisch und zeigt nicht den geforderten hohen Glanz.

## Patentansprüche

1. Pulverlack zur Herstellung von bei Temperaturen von mindestens 120 °C aushärtbaren, vergilbungsfreien, zähelastischen, lösemittel- und chemikalienbeständigen Beschichtungen, enthaltend
A) eine Bindemittelkomponente, bestehend aus mindestens einem Epoxid- und Anhydridgruppen aufweisenden Copolymerisat olefinisch ungesättigter Monomerer,
B) eine Härterkomponente mit einem Schmelzpunkt oder -bereich innerhalb des Temperaturbereichs von 40 bis 160°C, bestehend aus mindestens einer Komponente ausgewählt aus (i) (cyclo)aliphatischen Dicarbonsäuren mit 4 bis 20 Kohlenstoffatomen, (ii) monomeren und/oder polymeren Anhydriden derartiger Dicarbonsäuren, (iii) polyolmodifizierten, polymeren Anhydriden derartiger Dicarbonsäuren und (iv) aliphatischen Hydroxycarbonsäuren mit 4 bis 18 Kohlenstoffatomen, gegebenenfalls
C) weitere Zusatzvernetzer in Form von Uretdiongruppen aufweisenden Polyadditionsprodukten und gegebenfalls
D) aus der Pulverlacktechnologie bekannte Hilfs- und Zusatzmittel,
dadurch gekennzeichnet, daß die Bindemittelkomponente A) aus mindestens einem Copolymerisat aus
(i) 4 bis 50 Gew.-Teilen (Cyclo)alkyl-, Aryl- und/oder Aralkylester olefinisch ungesättigter Mono- und/oder Dicarbonsäuren mit 1 bis 18 Kohlenstoffatomen im Alkohol- bzw. Phenolrest,
(ii) 26 bis 45 Gew.-Teilen Glycidylacrylat und/oder Glycidylmethacrylat,
(iii) 1 bis 8 Gew.-Teilen Maleinsäureanhydrid und/oder Itaconsäureanhydrid und
(iv) 20 bis 69 Gew.-Teilen Vinylaromaten,
besteht, wobei die Summe der Gew.-Teile (i) bis (iv) 100 ergibt, mit der Maßgabe, daß das Copolymerisat eine Glasübergangstemperatur Tg von 30 bis 80°C aufweist, ein numerisches, mittleres Molekulargewicht Mₙ von 1000 bis 6000 und eine Molekulargewichtsverteilung, gemessen durch das Verhältnis des als Gewichtsmittel bestimmten, mittleren Molekulargewichts zum numerischen, mittleren Molekulargewicht (M_{w}/Mₙ), im Bereich von 2,5 bis 10,0 besitzt, und die Komponenten A) und B), in solchen Mengenverhältnissen vorliegen, daß auf jede Epoxidgruppe der Komponente A) 0,5 bis 1,5 Carboxyl- und/oder Anhydridgruppen der Komponente B) entfallen.

2. Pulverlack gemäß Anspruch 1, dadurch gekennzeichnet, daß die Komponente A) aus mindestens einem Copolymerisat aus
(i) 7,5 bis 45 Gew.-Teilen (Cyclo)alkylester olefinisch ungesättigter Mono- und/oder Dicarbonsäuren mit 1 bis 18 Kohlenstoffatomen im (Cyclo)alkylrest,
(ii) 26,5 bis 42 Gew.-Teilen, Glycidylacrylat und/oder Glycidylmethacrylat,
(iii) 1 bis 7 Gew.-Teilen Maleinsäureanhydrid und/oder Itaconsäureanhydrid und
(iv) 22 bis 65 Gew.-Teilen Vinylaromaten,
besteht, wobei die Summe der Gew.-Teile (i) bis (iv) 100 ergibt.

3. Pulverlack gemäß Anspruch 2, dadurch gekennzeichnet, daß die Komponente A) aus mindestens einem Copolymerisat aus 10 bis 40 Gew.-Teilen der Komponente (i), 27 bis 40 Gew.-Teilen der Komponente (ii), 1 bis 6 Gew.-Teilen der Komponente (iii) und 25 bis 62 Gew.-Teilen der Komponente (iv) besteht, wobei die Summe der Gew.-Teile (i) bis (iv) 100 ergibt.

4. Pulverlack gemäß Anspruch 1 bis 3, dadurch gekennzeichnet, daß die Komponente B) aus mindestens einer gesättigten, aliphatischen Dicarbonsäure mit 4 bis 12 Kohlenstoffatomen besteht.

5. Pulverlack gemäß Anspruch 1 bis 3, dadurch gekennzeichnet, daß die Komponente B) aus mindestens einem monomeren und/oder polymeren Anhydrid einer aliphatischen Dicarbonsäure mit 4 bis 12 Kohlenstoffatomen besteht.

6. Pulverlack gemäß Anspruch 1 bis 3, dadurch gekennzeichnet, daß die Komponente B) aus mindestens einem polyolmodifizierten, Säureanhydrid- und Carboxylgruppen im Molverhältnis von 1 : 1 bis 3 : 1 enthaltenden, Polyanhydrid einer aliphatischen Dicarbonsäure mit 4 bis 12 Kohlenstoffatomen besteht.

7. Verwendung des Pulverlackes gemäß Anspruch 1 bis 6 zur Beschichtung beliebiger hitzeresistenter Substrate.

8. Verwendung gemäß Anspruch 7 als Automobilklarlack.

## Claims

1. Powder coating for the production of tough and resilient, non-yellowing coatings resistant to solvents and chemicals which may be hardened at temperatures of at least 120°C, containing
A) a binder component consisting of at least one copolymer having epoxide and anhydride groups prepared from olefinically unsaturated monomers,
B) a hardener component with a melting point or range within the range of temperatures from 40 to 160°C consisting of at least one component selected from (i) (cyclo)aliphatic dicarboxylic acids having 4 to 20 carbon atoms, (ii) monomeric and/or polymeric anhydrides of such dicarboxylic acids, (iii) polyol-modified polymeric anhydrides of such dicarboxylic acids and (iv) aliphatic hydroxycarboxylic acids having 4 to 18 carbon atoms, optionally
C) further additional crosslinking agents in the form of polyaddition products having uretidione groups and optionally
D) auxiliary substances and additives known from powder coating technology,
characterised in that binder component A) consists of at least one copolymer prepared from
(i) 4 to 50 parts by weight of (cyclo)alkyl, aryl and/or aralkyl esters of olefinically unsaturated mono- and/or dicarboxylic acids having 1 to 18 carbon atoms in the alcohol or phenol residue,
(ii) 26 to 45 parts by weight of glycidyl acrylate and/or glycidyl methacrylate,
(iii) 1 to 8 parts by weight of maleic anhydride and/or itaconic anhydride and
(iv) 20 to 69 parts by weight of vinyl aromatics,
wherein the sum of the parts by weight of (i) to (iv) is 100, providing that the copolymer has a glass transition temperature T_{g} of 30 to 80°C, a number average molecular weight Mₙ of 1000 to 6000 and a molecular weight distribution, measured as the ratio of the weight average molecular weight to the number average molecular weight (M_{w}/Mₙ), in the range from 2.5 to 10.0 and components A) and B) are present in quantity ratios such that there are 0.5 to 1.5 carboxyl and/or anhydride groups of component B) for each epoxide group of component A).

2. Powder coating according to claim 1, characterised in that component A) consists of at least one copolymer prepared from
(i) 7.5 to 45 parts by weight of (cyclo)alkyl esters of olefinically unsaturated mono- and/or dicarboxylic acids having 1 to 18 carbon atoms in the (cyclo)alkyl residue,
(ii) 26,5 to 42 parts by weight of glycidyl acrylate and/or glycidyl methacrylate,
(iii) 1 to 7 parts by weight of maleic anhydride and/or itaconic anhydride and
(iv) 22 to 65 parts by weight of vinyl aromatics,
wherein the sum of the parts by weight of (i) to (iv) is 100.

3. Powder coating according to claim 2, characterised in that component A) consists of at least one copolymer prepared from 10 to 40 parts by weight of component (i), 27 to 40 parts by weight of component (ii), 1 to 6 parts by weight of component (iii) and 25 to 62 parts by weight of component (iv), wherein the sum of the parts by weight of (i) to (iv) is 100.

4. Powder coating according to claims 1 to 3, characterised in that component B) consists of at least one saturated aliphatic dicarboxylic acid having 4 to 12 carbon atoms.

5. Powder coating according to claims 1 to 3, characterised in that component B) consists of at least one monomeric and/or polymeric anhydride of an aliphatic dicarboxylic acid having 4 to 12 carbon atoms.

6. Powder coating according to claims 1 to 3, characterised in that component B) consists of at least one polyol-modified polyanhydride of an aliphatic dicarboxylic acid having 4 to 12 carbon atoms and containing acid anhydride and carboxyl groups in a molar ratio of 1:1 to 3:1.

7. Use of the powder coating according to claims 1 to 6 for coating any desired heat-resistant substrates.

8. Use according to claim 7 as an automotive clear lacquer.

## Revendications

1. Laque, peinture ou vernis pulvérulent pour la préparation d'enductions durcissables à des températures d'au moins 120°C, exemptes de jaunissement, viscoélastiques et résistant aux solvants et aux produits chimiques, contenant
A) un composant de liant constitué d'au moins un copolymère de monomères à insaturation oléfinique, présentant des groupes époxyde et des groupes anhydride,
B) un composant de durcisseur possédant un point de fusion, ou un domaine de fusion dans le plage de température de 40 à 160°C, constitué d'au moins un composant choisi parmi le groupe comprenant (i) des acides dicarboxyliques (cyclo)aliphatiques contenant de 4 à 20 atomes de carbone, (ii) des anhydrides monomères et/ou polymères d'acides dicarboxyliques de ce type, (iii) des anhydrides polymères d'acides dicarboxyliques de ce type, modifiés avec un polyol, et (iv) des acides hydroxycarboxyliques aliphatiques contenant de 4 à 18 atomes de carbone, le cas échéant,
C) des agents de réticulation d'addition supplémentaires sous la forme de produits de polyaddition présentant des groupes uretdione et, le cas échéant,
D) des adjuvants et des additifs connus de la technologie des laques, des peintures ou des vernis pulvérulents,
caractérisé en ce que le composant de liant A) est constitué d'au moins un copolymère constitué par
(i) à concurrence de 4 à 50 parties en poids, des esters (cyclo)alkyliques, aryliques et/ou aralkyliques d'acides mono- et/ou dicarboxyliques à insaturation oléfinique contenant de 1 à 18 atomes de carbone dans le radical alcool, respectivement dans le radical phénol,
(ii) à concurrence de 26 à 45 parties en poids, de l'acrylate de glycidyle et/ou du méthacrylate de glycidyle,
(iii) à concurrence de 1 à 8 parties en poids, de l'anhydride maléique et/ou de l'anhydride itaconique, et
(iv) à concurrence de 20 à 69 parties en poids, des composés vinylaromatiques,
la somme des parties en poids (i) à (iv) étant égale à 100, avec cette mesure que le copolymère présente une température de transition vitreuse Tg de 30 à 80°C, possède un poids moléculaire moyen en nombre Mₙ de 1000 à 6000 et une distribution du poids moléculaire, mesurée par le rapport du poids moléculaire moyen déterminé comme moyenne en poids au poids moléculaire moyen en nombre (M_{w}/Mₙ), dans le domaine de 2,5 à 10,0, et les composants A) et B) sont présents dans des proportions telles que, pour chaque groupe époxyde du composant A), on obtient de 0,5 à 1,5 groupe carboxyle et/ou anhydride du composant B).

2. Laque, peinture ou vernis pulvérulent selon la revendication 1, caractérisé en ce que le composant A) est constitué d'au moins un copolymère constitué par
(i) à concurrence de 7,5 à 45 parties en poids, des esters (cyclo)alkyliques d'acides mono- et/ou dicarboxyliques à insaturation oléfinique contenant de 1 à 18 atomes de carbone dans le radical (cyclo)alkyle,
iii) à concurrente de 26,5 à 42 parties en poids, de l'acrylate de glycidyle et/ou du méthacrylate de glycidyle,
(iii) à concurrence de 1 à 7 parties en poids, de l'anhydride maléique et/ou de l'anhydride itaconique, et
(iv) à concurrence de 22 à 85 parties en poids, des composés vinylaromatiques,
la somme des parties en poids (i) à (iv) étant égale à 100.

3. Laque, peinture ou vernis pulvérulent selon la revendication 2, caractérisé en ce que le composant A) est constitué d'au moins un copolymère constitué par, à concurrence de 10 a 40 parties en poids, le composant (i), a concurrence de 27 à 40 parties en poids, le composant (ii), à concurrence de 1 à 6 parties en poids, le composant (iii) et, à concurrence de 25 à 62 parties en poids, le composant (iv), la somme des parties en poids (i) à (iv) étant égale à 100.

4. Laque, peinture ou vernis pulvérulent selon les revendications 1 à 3, caractérisé en ce que le composant B) est constitué d'au moins un acide dicarboxylique aliphatique saturé contenant de 4 à 12 atomes de carbone.

5. Laque, peinture ou vernis pulvérulent selon les revendications 1 à 3, caractérisé en ce que le composant B) est constitué d'au moins un anhydride monomère et/ou polymère d'un acide dicarboxylique aliphatique contenant de 4 à 12 atomes de carbone.

6. Laque, peinture ou vernis pulvérulent selon les revendications 1 à 3, caractérisé en ce que le composant B) est constitué d'au moins un polyanhydride modifié avec un polyol, contenant des groupes d'anhydrides d'acides et des groupes carboxyle dans le rapport molaire de 1:1 à 3:1, d'un acide dicarboxylique aliphatique contenant de 4 à 12 atomes de carbone.

7. Utilisation de la laque, de la peinture ou du vernis pulvérulent selon les revendications 1 à 6 pour l'enduction de n'importe quels substrats résistant à la chaleur.

8. Utilisation selon la revendication 7 à titre de peinture claire pour des véhicules automobiles.
